# EUROPÄISCHE PATENTSCHRIFT

(11) **EP 1 091 375 B1**
(45) Veröffentlichungstag und Bekanntmachung des Hinweises auf die Patenterteilung: **29.08.2007**
(21) Anmeldenummer: 00121270.3
(22) Anmeldetag: 05.10.2000
(51) Int. Cl.: H01H 13/70

(54) **Mehrfachschalter**
Multiple switch
Commutateur multiple

(30) Priorität: 07.10.1999 DE 29917684 U
(43) Veröffentlichungstag der Anmeldung: 11.04.2001
(73) Patentinhaber: TRW Automotive Electronics & Components GmbH & Co. KG, 78315 Radolfzell (DE)
(72) Erfinder: Altmann, Markus, 78345 Moos-Bankholzen (DE)
(74) Vertreter: Degwert, Hartmut

(56) Entgegenhaltungen:
- EP-A- 0 858 924
- DE-A- 4 436 050
- DE-U- 8 534 929
- US-A- 3 970 812
- US-A- 4 611 879

## Beschreibung

Die Erfindung betrifft einen elektrischen Mehrfachschalter mit zwei oder mehr in einer Reihe angeordneten Schaltereinheiten, die eine gemeinsame Bedienfläche bilden, gemäß dem Oberbegriff von Anspruch 1.

Derartige Mehrfachschalter werden insbesondere in Kraftfahrzeugen zur elektrischen Steuerung diverser Geräte verwendet, wenn verwandte Steuerungsfunktionen durch räumlich zusammengefaßte Schaltergruppen nach ergonomischen und auch gestalterischen Gesichtspunkten z.B. auf der Armaturentafel abgebildet werden. Durch Verwendung einzelner Schaltermodule, die in passende Öffnungen einer Blende eingesetzt werden, können beliebige Schaltergruppen kombiniert werden; die Montage einschließlich der elektrischen Verschaltung einzelner Schaltermodule ist jedoch sehr aufwendig. Daher werden derartige Mehrfachschalter in einheitlichen Baugruppen gefertigt, die sowohl eine perfekte Ausrichtung der Schaltereinheiten für ein optimales Erscheinungsbild als auch eine rationelle und funktionell korrekte Verschaltung der einzelnen Schaltereinheiten gewährleisten.

Für die Herstellung derartiger Mehrfachschalter, deren Gehäuse ganz überwiegend aus Kunststoff bestehen, werden komplexe, zusätzliche Formwerkzeuge und Produktionslinien benötigt, die durch den daraus resultierenden Mehraufwand die Produktionskosten belasten.

In der gattungsgemäßen US-A-3,970,812 ist ein Mehrfachschalter mit mehreren in einer Reihe angeordneten elektrischen Schaltereinheiten gezeigt, wobei die Schaltereinheiten mit separaten Modulgehäusen ausgestattet sind und benachbarte Modulgehäuse durch Verbindungselemente mechanisch starr miteinander gekoppelt sind. Die Verbindungselemente weisen einen quadratischen Querschnitt auf, wobei an den Ecken jeweils Ausnehmungen gebildet sind, in die entsprechende Vorsprünge der Modulelemente formschlüssig eingreifen. Zur endgültigen Fixierung des Mehrfachschalters können durch in den Verbindungselementen vorgesehene Bohrungen Schrauben eingeführt werden, mit denen die Schaltereinheiten beispielsweise auf einer Leiterplatte befestigt werden können.

Durch die Erfindung wird ein Mehrfachschalter zur Verfügung gestellt, der hinsichtlich des Erscheinungsbildes und der rationellen und funktionell korrekten Verschaltung keine Nachteile aufweist, fertigungstechnisch jedoch wesentlich günstiger ist.

Gemäß der Erfindung sind die Schaltereinheiten mit einheitlichen, separaten Modulgehäusen ausgestattet, und je zwei benachbarte Modulgehäuse sind durch ein Verbindungselement mechanisch miteinander gekoppelt, wobei das Verbindungselement mit einem allgemein quaderförmigen Grundkörper ausgebildet ist, der zwei parallele, an die Seitenflächen der Modulgehäuse ansetzbare Hauptflächen, eine Grundfläche und eine zur Grundfläche parallele Oberseite aufweist, wobei das Verbindungselement ferner zwei schmale Stirnseiten aufweist, an deren von der Grundfläche entfernten Schmalseiten je ein senkrecht abstehender Flansch angeformt ist, der zwei an die Seitenwände der Modulgehäuse anschmiegbare Verbindungsflächen aufweist, und wobei an der Grundfläche zwei die Hauptflächen überragende Laschen angeformt sind, die je wenigstens einen in Richtung der Oberseite aufragenden Zapfen aufweisen, wobei an der Grundfläche der Modulgehäuse Ausnehmungen gebildet sind, die den Laschen mit Zapfen entsprechen. Die Modulgehäuse für beliebig komplexe Mehrfachschalter können so mit demselben, relativ einfachen Werkzeug hergestellt werden. Das Verbindungsstück ist ein Bauteil von einfacher Form, dessen Herstellung gleichfalls mit geringem Aufwand möglich ist. Die benachbarten Schaltereinheiten können geometrisch einheitlich gestaltet und mit unterscheidungskräftigen Symbolen versehen werden.

Besonders zweckmäßig ist die Herstellung der Modulgehäuse wie auch des Verbindungsstücks aus Kunststoff durch Spritzgießen.

Die Modulgehäuse des Mehrfachschalters werden vorzugsweise sowohl formschlüssig als auch durch Verschweißen mit dem Verbindungsstück, und dadurch auch miteinander, gekoppelt. Eine perfekte Ausrichtung der Modulgehäuse bezüglich einer gemeinsamen Schalterblende kann durch Verwendung einer Lehre und nachfolgende Fixierung durch Verschweißen erfolgen.

Die Formschlußelemente auf den beiden Anschlußseiten zur mechanischen Kopplung und Vorfixierung der Modulgehäuse mit der erforderlichen Anzahl von Verbindungsstücken sind vorzugsweise codiert, d.h. in wenigstens einer der Eigenschaften Form, Größe und Anordnung verschieden, um eine eindeutige Orientierung der Modulgehäuse innerhalb einer Schaltergruppe zu gewährleisten.

Weitere Merkmale und Vorteile der Erfindung ergeben sich aus der folgenden Beschreibung einer vorteilhaften Ausführungsform und aus den beigefügten Zeichnungen, auf die Bezug genommen wird. In den Zeichnungen zeigen:
Fig. 1 ein Perspektivansicht eines Mehrfachschalters mit zwei Schaltereinheiten;
Fig. 2 einen Teilschnitt des Mehrfachschalters; und
Fig. 3 eine vergrößerte Perspektivansicht eines Verbindungsstücks.

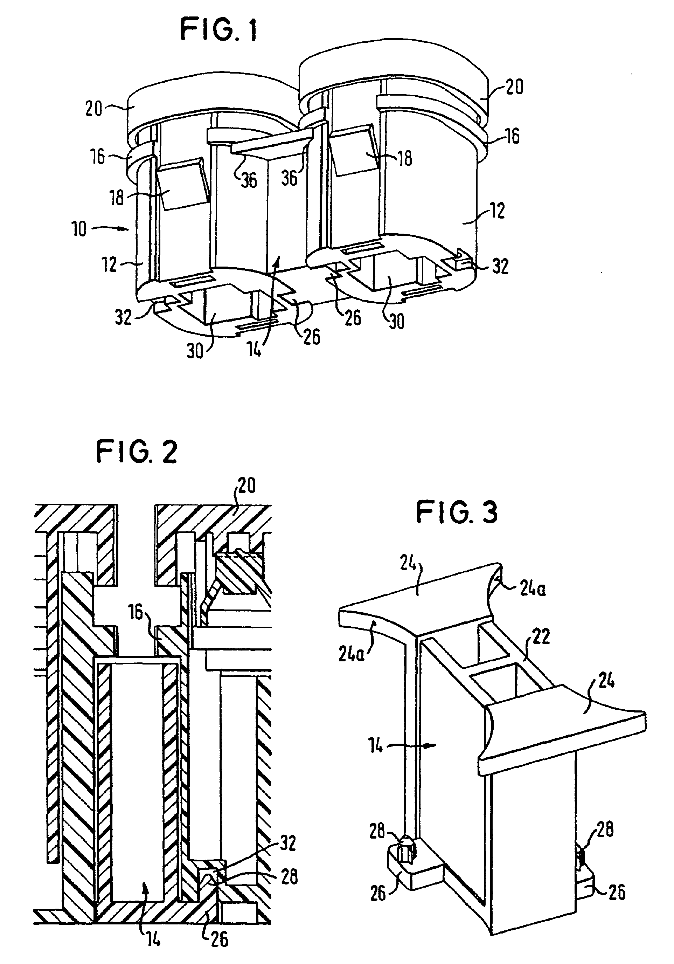

Der in Fig. 1 allgemein mit 10 bezeichnete Mehrfachschalter besteht aus zwei Schaltereinheiten mit je einem Modulgehäuse 12 und einem die benachbarten Modulgehäuse verbindenden Verbindungsstück 14. Die einheitlichen Modulgehäuse 12 sind allgemein zylindrisch, haben eine dem gewünschten Erscheinungsbild entsprechende Querschnittsform und sind zum Einsetzen in eine gemeinsame Schalterblende an einem Armaturenträger im Fahrzeug bestimmt. Sie werden durch Spritzgießen aus Kunststoff in einem einheitlichen Werkzeug hergestellt, ebenso wie das Verbindungsstück 14. Die Modulgehäuse 12 haben zur Ausrichtung an der gemeinsamen Schalterblende einen umlaufenden Auflagebund 16 und sind mit Rastelementen 18 versehen, die beim Einsetzen in eine Öffnung der Schalterblende die Berandung dieser Öffnung hintergreifen. Jede Schaltereinheit besitzt eine in dem betreffenden Modulgehäuse 12 verschiebbar geführte Taste 20, die mit einem beleuchtbaren Symbol versehen sein kann.

Das Verbindungsstück 14 besteht aus einem allgemein quaderförmigen Grundkörper 22, der zwei parallele, an die Seitenflächen der Modulgehäuse 12 ansetzbare Hauptflächen, eine Grundfläche, eine zur Grundfläche parallele Oberseite und zwei schmale Stirnflächen aufweist. An den von der Grundfläche entfernten Schmalseiten dieser Stirnflächen ist je ein senkrecht abstehender Flansch 24 angeformt. Die Flansche 24 weisen zwei gekrümmte, an die Seitenwände der Modulgehäuse anschmiegbare Verbindungsflächen 24a auf. An der Grundfläche sind zwei die Hauptflächen seitlich überragende Laschen 26 angeformt. Die Anordnung der Laschen 26 beiderseits des Grundkörpers 22 ist unsymmetrisch. Jede Lasche 26 trägt einen in Richtung der Oberseite aufragenden konisch geformten Zentrierungs-Zapfen 28. Die beiden Zentrierungs-Zapfen 28 eines jeden Verbindungsstücks 14 sind verschieden groß und/oder geformt.

An der von den Tasten 20 abgewandten Grundfläche der Modulgehäuse 12 sind neben einem zentralen Steckerschacht 30 Ausnehmungen 32 gebildet, die in Form, Größe und Anordnung den Laschen 26 mit Zentrierungs-Zapfen 28 entsprechen.

Bei der Montage des Mehrfachschalters 10 erfolgt zunächst eine Vorfixierung der benachbarten Modulgehäuse 12 durch Einsetzen der Laschen 26 mit Zentrierungs-Zapfen 28 eines Verbindungsstücks 14 in die entsprechenden Ausnehmungen 32 der Modulgehäuse 12, wobei die Verbindungsflächen 24a der Flansche 24 den Auflagebund 16 untergreifen. Die durch unterschiedliche Größe der Zentrierungs-Zapfen 28 bewirkte Codierung verhindert eine um 180° verdrehte (fehlerhafte) Orientierung der Schaltereinheiten in dem Mehrfachschalter 10. Die Modulgehäuse 12 werden dann in einer Lehre präsise ausgerichtet. Anschließend erfolgt eine definitive Fixierung durch Verschweißen, vorzugsweise durch Ultraschallschweißen im Bereich der Verbindungsflächen 24a, in Fig 1 bei 36 angedeutet.

## Patentansprüche

1. Mehrfachschalter mit wenigstens zwei in einer Reihe angeordneten elektrischen Schaltereinheiten, die eine gemeinsame Bedienfläche bilden, wobei die Schaltereinheiten mit einheitlichen, separaten Modulgehäusen (12) ausgestattet sind und je zwei benachbarte Modulgehäuse (12) durch ein Verbindungselement (14) mechanisch starr miteinander gekoppelt sind, wobei das Verbindungselement (14) mit einem allgemein quaderförmigen Grundkörper (22) ausgebildet ist, der zwei parallele, an die Seitenflächen der Modulgehäuse (12) ansetzbare Hauptflächen, eine Grundfläche und eine zur Grundfläche parallele Oberseite aufweist, **dadurch gekennzeichnet, daß** das Verbindungselement (14) ferner zwei schmale Stirnseiten aufweist, an deren von der Grundfläche entfernten Schmalseiten je ein senkrecht abstehender Flansch (24) angeformt ist, der zwei an die Seitenwände der Modulgehäuse (12) anschmiegbare Verbindungsflächen (24a) aufweist, und daß an der Grundfläche zwei die Hauptflächen überragende Laschen (26) angeformt sind, die je wenigstens einen in Richtung der Oberseite aufragenden Zapfen (28) aufweisen, wobei an der Grundfläche der Modulgehäuse (12) Ausnehmungen (32) gebildet sind, die den Laschen (26) mit Zapfen (28) entsprechen.

2. Mehrfachschalter nach Anspruch 1, **dadurch gekennzeichnet, daß** die Modulgehäuse (12) und das Verbindungselement (14) formschlüssig gekoppelt sind.

3. Mehrfachschalter nach Anspruch 1 oder 2, **dadurch gekennzeichnet, daß** die Modulgehäuse (12) und das Verbindungselement (14) aus Kunststoff geformt sind.

4. Mehrfachschalter nach Anspruch 3, **dadurch gekennzeichnet, daß** die Modulgehäuse (12) mit dem Verbindungselement (14) sowohl formschlüssig gekoppelt als auch verschweißt sind.

5. Mehrfachschalter nach einem der vorstehenden Ansprüche, **dadurch gekennzeichnet, daß** die Laschen (26) mit Zapfen (28) und die Ausnehmungen (32) an einer Seite des Modulgehäuses (12) in wenigstens einer der folgenden Eigenschaften verschieden von den an der gegenüberliegenden Seite sind: Größe, Form, Anordnung.

6. Mehrfachschalter nach einem der vorhergehenden Ansprüche, **dadurch gekennzeichnet, daß** die Zapfen (28) eine konische Form aufweisen.

7. Mehrfachschalter nach Anspruch 6, **dadurch gekennzeichnet, daß** die Verbindungsflächen (24a) der Flansche (24) jeweils unter einen umlaufenden Auflagebund (16) an der Seitenfläche eines Modulgehäuses (12) greifen.

8. Mehrfachschalter nach einem der vorhergehenden Ansprüche, **dadurch gekennzeichnet, daß** die Flansche (24) mit den Seitenflächen der Modulgehäuse durch Schweißen, insbesondere Ultraschallschweißen, verbunden sind.

## Claims

1. A multiple switch comprising at least two electric switch units arranged in a row and forming a common actuating surface, the switch units being provided with uniform separate module housings (12) and two respective adjoining module housings (12) being mechanically rigidly coupled to each other by a connecting element (14), the connecting element (14) being configured so as to have a generally parallelepipedal base body (22) having two parallel main surfaces adapted to be applied to the side surfaces of the module housings (12), a base surface, and an upper side parallel to the base surface, **characterized in that** the connecting element (14) further includes two narrow end faces, a perpendicularly projecting flange (24) being integrally molded to each of the narrow sides, remote from the base surface, of the narrow end faces, the flange (24) having two connecting surfaces (24a) which can be brought into snug contact with the side walls of the module housings (12), and that the base surface has two tabs (26) integrally molded therewith, the tabs (26) protruding beyond the main surfaces and each including at least one pin (28) projecting towards the upper side, with recesses (32) being formed on the base surface of the module housings (12), the recesses (32) corresponding to the tabs (26) with the pins (28).

2. The multiple switch as set forth in claim 1, **characterized in that** the module housings (12) and the connecting element (14) are coupled with an interlocking fit.

3. The multiple switch as set forth in claim 1 or 2, **characterized in that** the module housings (12) and the connecting element (14) are shaped of plastics.

4. The multiple switch as set forth in claim 3, **characterized in that** the module housings (12) are coupled to the connecting element (14) with an interlocking fit and are also welded thereto.

5. The multiple switch as set forth in any of the preceding claims, **characterized in that** the tabs (26) with the pins (28) and the recesses (32) on one side of the module housing (12) differ by at least one of the following properties from those on the opposite side: size, shape, arrangement.

6. The multiple switch as set forth in any of the preceding claims, **characterized in that** the pins (28) are conical in shape.

7. The multiple switch as set forth in claim 6, **characterized in that** each of the connecting surfaces (24a) of the flanges (24) engages below a surrounding support collar (16) at the side surface of a module housing (12).

8. The multiple switch as set forth in any of the preceding claims, **characterized in that** the flanges (24) are connected to the side surfaces of the module housings by welding, in particular ultrasonic welding.

## Revendications

1. Commutateur multiple comportant au moins deux unités de commutateur électrique agencées dans une rangée et formant une surface commune d'actionnement, les unités de commutateur étant équipées de boîtiers de module (12) séparés uniformes, et deux boîtiers de module (12) voisins étant respectivement accouplés mécaniquement de façon rigide l'un à l'autre par un élément de liaison (14), l'élément de liaison (14) étant réalisé avec un corps de base (22) en général parallélépipédique qui présente deux surfaces principales parallèles susceptibles d'être rapportées sur les faces latérales des boîtiers de module (12), une surface de base et une face supérieure parallèle à la surface de base, **caractérisé en ce que** l'élément de liaison (4) présente en outre deux faces frontales étroites sur les petits côtés desquelles, qui sont éloignés de la surface de base, est conformée une bride (24) respective en saillie perpendiculaire qui présente deux surfaces de liaison (24a) qui peuvent épouser les parois latérales des boîtiers de module (12), et **en ce que** sur la surface de base sont conformées deux pattes (26) surplombant la surface principale, lesquelles présentent au moins un tenon (28) qui se dresse en direction de la face supérieure, des évidements (32) étant formés sur la surface de base du boîtier de module (12), lesquels correspondent aux pattes (26) avec les tenons (28).

2. Commutateur multiple selon la revendication 1, **caractérisé en ce que** les boîtiers de module (12) et l'élément de liaison (14) sont accouplés par coopération de formes.

3. Commutateur multiple selon la revendication 1 ou 2, **caractérisé en ce que** les boîtiers de module (12) et l'élément de liaison (14) sont conformés en matière plastique.

4. Commutateur multiple selon la revendication 3, **caractérisé en ce que** les boîtiers de module (12) sont non seulement accouplés par coopération de formes mais aussi soudés à l'élément de liaison (14).

5. Commutateur multiple selon l'une des revendications précédentes, **caractérisé en ce que** sur un côté du boîtier de module (12), les pattes (26) avec les tenons (28) et les évidements (32) diffèrent de celles du côté opposé par au moins une des propriétés suivantes : taille, forme, agencement.

6. Commutateur multiple selon l'une des revendications précédentes, **caractérisé en ce que** les tenons (28) présentent une forme conique.

7. Commutateur multiple selon la revendication 6, **caractérisé en ce que** les surfaces de liaison (24a) des brides (24) s'engagent chacune sous une collerette d'appui (16) périphérique sur la face latérale d'un boîtier de module (12).

8. Commutateur multiple selon l'une des revendications précédentes, **caractérisé en ce que** les brides (24) sont reliées aux faces latérales des boîtiers de module par soudure, en particulier par soudure à ultrasons.
